# EUROPEAN PATENT APPLICATION

(11) **EP 4 799 983 A1**
(43) Date of publication of application: **02.09.2026**
(21) Application number: 26160961.4
(22) Date of filing: 26.02.2026
(51) Int. Cl.: C02F 1/461, A47L 15/42, C25B 11/052

(54) **WATER TREATMENT APPARATUS AND WASHING APPARATUS INCLUDING SAME**

(30) Priority: 28.02.2025 KR 20250026880
(71) Applicant: LG Electronics Inc., Yeongdeungpo-gu Seoul 07336 (KR)
(72) Inventor: JOUNG, Jeayoul, Seoul (KR); OH, Byungsoo, Seoul (KR); CHO, Sanggeun, Seoul (KR); KIM, Younsu, Seoul (KR)
(74) Representative: Schott, Jakob Valentin

(57) **Abstract**

A water treatment apparatus and a washing apparatus include a soft water generator that receives raw water and generates soft water, a salt water generator that generates salt water, and an electrolyzed water generator that generates electrolyzed water by electrolyzing mixed water in which the soft water generated from the soft water generator and the salt water generated from the salt water generator are mixed.

## Description

### CROSS-REFERENCE TO RELATED APPLICATION(S)

This application claims priority under 35 U.S.C. §119 to Korean Application No. 10-2025-0026880, filed in Korea on February 28, 2025, whose entire disclosure is hereby incorporated by reference.

### BACKGROUND

### 1. Field

Aspects of the present disclosure relate to a water treatment apparatus and a washing apparatus including the same. More specifically, aspects of the present disclosure relate to a water treatment apparatus that generates electrolyzed water with relatively low energy and has relatively enhanced washing power, and a washing apparatus including the same.

### 2. Background

Generally, water treatment apparatuses are disclosed in various forms today. Among the methods typically applied by water treatment apparatuses, deionization methods such as Electro Deionization (EDI), Continuous Electro Deionization (CEDI), and Capacitive Deionization (CDI) are recently gaining commercial attention. Among these deionization methods, the CDI method is most commonly applied in water treatment apparatuses.

The CDI method refers to a method that removes ions (e.g., scale) from water by utilizing the principle of ions adsorbing and desorbing on the surface of an electrode due to electrical force. When ion-containing treatment water is passed between electrodes (e.g., an anode and a cathode) while voltage is applied to the electrodes, anions migrate to the anode, and cations migrate to the cathode. That is, adsorption occurs. Through the adsorption, ions in the treatment water may be removed.

However, as this ion adsorption continues, the electrodes eventually reach a state in which the electrodes can no longer adsorb ions because scale has formed on the electrodes and block further absorption. When this state is reached, the electrode may be regenerated by causing the ions previously adsorbed on the electrode to be separated from the electrode. In this case, washing water containing ions separated from the electrodes may be discharged to the outside of the water treatment apparatus. This regeneration may be achieved, for example, by either not applying voltage to the electrodes or by a polarity switching operation of applying voltages opposite to those applied during the adsorption process.

As described above, scale formation can be prevented through the electrode polarity switching operation. However, the polarity switching operation may cause damage to the electrodes due to repetitive switching of high potentials. Accordingly, the lifespan of the metal constituting the electrodes may be shortened through the electrode polarity switching operation. For example, performing the polarity switching operation to remove scale may cause repeated oxidation and reduction of the electrode metal layer, which may damage the electrode and shorten the lifespan of the catalyst electrode. Additionally, during this scale removal process, scale material may be re-adsorbed to the opposite electrode, reducing the efficiency of scale removal.

Generally, dishwashers are designed to make dishwashing easier, more hygienic, and more efficient. The dishwasher typically uses washing water contained in a lower washing tank of the dishwasher to wash dishes or cutlery with food residue or foreign substances by using methods such as water spray washing or brush washing. Dishes to be washed are placed on a rack formed in the dishwasher, and washing water is supplied through spray nozzles or the dishes are washed using a predetermined brush. After the washing is completed, the washing water used for the washing is discharged through a drain pipe.

Conventionally, washing systems and washing methods using ultraviolet light, ozone gas, or ultrasonic waves have been proposed to wash fruits and vegetables without using synthetic detergents. However, such devices and methods have problems in that the technologies are complex and installation costs are high, making them difficult to put into practical use. In addition, methods using ultraviolet light may be suitable for air sterilization but may not be suitable for sterilizing water, Furthermore, methods using ozone gas generally require appropriate control of the amount of ozone used because ozone is harmful to the human body, but there are significant difficulties in maintaining ozone at an appropriate level. Further, methods using only ultrasonic waves have a disadvantage in that sterilization efficiency is generally low.

Meanwhile, in order to improve the quality of water supplied to a dishwasher and to enhance drying performance, a method has been used in which a separate water softening device is connected and soft water is used during washing to achieve hygienic washing. However, in such a water softening method, there may be a problem in that hard water generated during a regeneration step for improving the softening performance of an ion exchange resin is discarded as it is. In addition, even when preliminary washing or the like is performed using the hard water generated during the regeneration step, a large amount of rinsing water may be required, resulting in an increase in water consumption.

Meanwhile, sterilization power may be increased by generating various oxidizing agents using electrolysis. However, electrolysis requires the supply of water having high total dissolved solids (TDS), and in such a case, relatively expensive electrodes may be required in order to increase the generation ratio of electrolyzed water.

In an example disclosed in Korean Patent No. KR10-1551978B1, an electrolyzed-water sterilization water treatment apparatus and washing apparatus may generate sterilizing substances by electrolyzing hard water produced during a process of softening raw water introduced into a water treatment apparatus and washing apparatus including a water softening module and an electrolyzed water generator are used during washing. However, in this example, when the electrolyzed water module is operated using hard water generated by the water softener, in regions such as Korea where tap water having a low TDS concentration is supplied, regeneration of the water softener is performed after several dishwasher operations. Accordingly, the hard water generated during regeneration of the water softener cannot be used for every dishwasher operation, thereby limiting the use of the electrolyzed water module. For example, in tap water softened through the water softener, divalent cations (Ca²⁺, Mg²⁺, etc.) may be replaced with monovalent cations (Na⁺) by an ion exchange resin. However, since the equivalent electrical conductivity remains the same before and after treatment, the TDS remains equally low. When the electrolyzed water module is operated using such soft water, a high voltage should be applied for electrolysis to occur due to the low TDS. As a result, there are problems in that the cost of electrodes of the electrolyzed water module increases and the lifespan thereof is reduced. In addition, as electrode materials of the electrolyzed water module, expensive noble metal materials, such as platinum, are generally used in large amounts in order to ensure stability in acidic and alkaline environments. This use of expensive noble metal materials may result in a significant increase in cost in eco-friendly washing apparatus utilizing electrolysis apparatuses. The above reference is incorporated by reference herein where appropriate for appropriate teachings of additional or alternative details, features and/or technical background.

### BRIEF DESCRIPTION OF THE DRAWINGS

The embodiments will be described in detail with reference to the following drawings in which like reference numerals refer to like elements wherein:
FIG. 1 is a conceptual diagram illustrating the operation of a washing apparatus according to one embodiment of the present disclosure;
FIG. 2 is a cross-sectional view schematically illustrating the structure of a washer of FIG. 1;
FIG. 3 is a schematic diagram illustrating the structure of an electrolyzed water generator of FIG. 1;
FIGS. 4a and 4b are cross-sectional views illustrating the electrode structures of the electrolyzed water generator of FIG. 1;
FIG. 5 is a diagram illustrating the relationship between voltage and current for tap water and mixed water of the tap water and salt water;
FIG. 6 is a graph illustrating the pH concentration of water and the solubility of CaCos;
FIG. 7 is a graph illustrating the correlation between the pH concentration of water and fractions such as Mg²⁺ and MgOH⁺;
FIG. 8a is a diagram illustrating the operation of the electrolyzed water generator according to one embodiment of the present disclosure;
FIG. 8b is a diagram illustrating the operation of an electrolyzed water generator according to another embodiment of the present disclosure; and
FIG. 9 is a cross-sectional view illustrating the structure of an electrode of an electrolyzed water generator according to another embodiment of the present disclosure.

### DETAILED DESCRIPTION

Advantages and features of the present disclosure and methods for achieving those of the present disclosure will become apparent upon referring to embodiments described later in detail with reference to the attached drawings. However, embodiments are not limited to the embodiments disclosed hereinafter and may be embodied in different ways. The embodiments are provided for perfection of disclosure and for informing persons skilled in this field of art of the scope of the present disclosure. The same reference numerals may refer to the same elements throughout the specification.

Spatially-relative terms such as "below", "beneath", "lower", "above", or "upper" may be used herein to describe one element's relationship to another element as illustrated in the Figures. It will be understood that spatially-relative terms are intended to encompass different orientations of the device in addition to the orientation depicted in the Figures. For example, if the device in one of the figures is turned over, elements described as "below" or "beneath" other elements would then be oriented "above" the other elements. The exemplary terms "below" or "beneath" can, therefore, encompass both an orientation of above and below. Since the device may be oriented in another direction, the spatially-relative terms may be interpreted in accordance with the orientation of the device.

The terminology used in the present disclosure is for the purpose of describing particular embodiments only and is not intended to limit the disclosure. As used in the disclosure and the appended claims, the singular forms "a", "an" and "the" are intended to include the plural forms as well, unless context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, the thickness or size of each layer is exaggerated, omitted, or schematically illustrated for convenience of description and clarity. Also, the size or area of each constituent element does not entirely reflect the actual size thereof.

Hereinafter, exemplary embodiments of the present disclosure will be described with reference to the accompanying drawings. Moreover, the present disclosure will be described with reference to drawings for explaining a water treatment apparatus and a washing apparatus 1 according to one embodiment of the present disclosure.

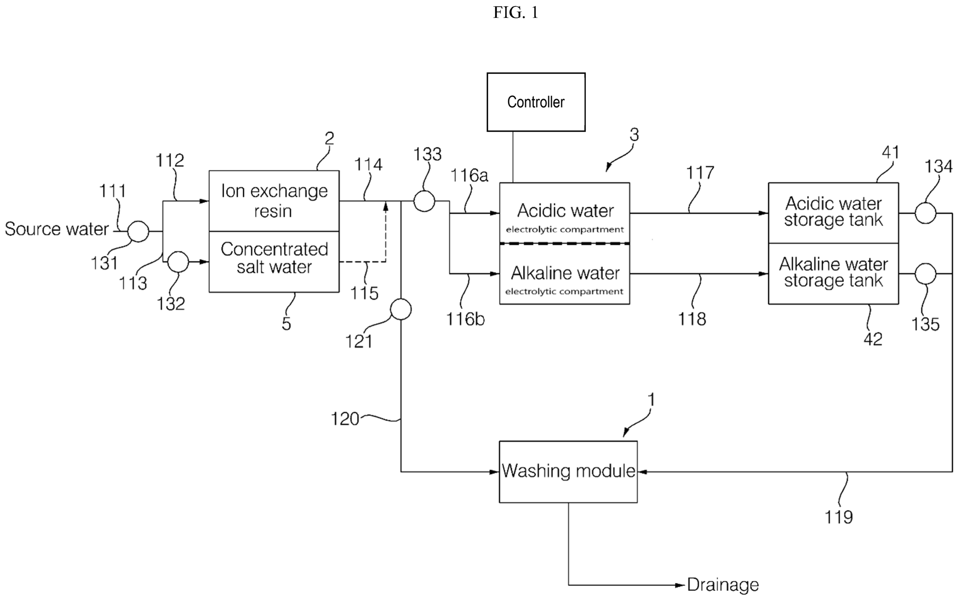

FIG. 1 is a conceptual diagram illustrating the operation of a washing apparatus according to one embodiment of the present disclosure. Referring to FIG. 1, the washing apparatus in one example includes a washer (or washing module) 1, a soft water generator (or soft water chamber) 2 connected to a water source that provides source water, a salt water generator or (salt water chamber) 5 that generates salt water, and an electrolyzed water generator (or electrolyzed water chamber) 3 that electrolyzes mixed water in which the soft water generated in the soft water generator 2 and the salt water generated in the salt water generator 5 are mixed to generate electrolyzed water. In other examples, the electrolyzed water generator 3 may also electrolyze soft water generated in the soft water generator 2 using salt water generated in the salt water generator 5 to generate electrolyzed water. The soft water generator 2, the salt water generator 5, and the electrolyzed water generator 3 may be collectively referred to as a water treatment apparatus.

Water hardness is a measure of an amount of dissolved minerals, such as calcium, magnesium, or other metal cations. In this context, "soft" water may refer to water having less than a first threshold of hardness (e.g., less than 17.1 mg/L), while "hard" water may refer to water having more than a second threshold amount of dissolved minerals, such as calcium, magnesium, or other metal cations.

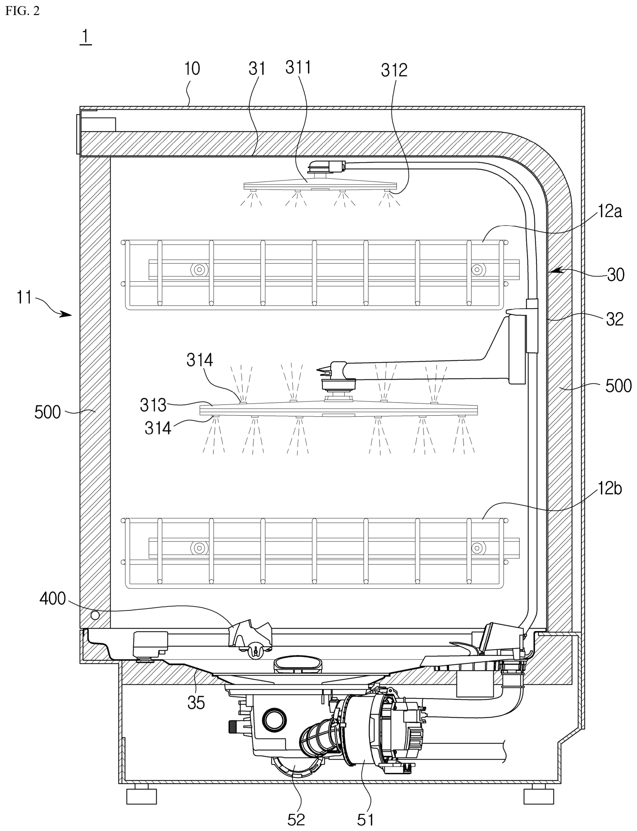

The washer 1 may provide a space in which an object to be washed is washed. The washer 1 may receive electrolyzed water and use the electrolyzed water to wash the object to be washed. The washer 1 may include, for example, either a dishwasher for washing dishes or a washing machine for washing clothes, but the washer 1 may be included in other types of commercial or residential equipment that perform washing operations. An example of the washer 1 as a dishwasher is described in detail in FIG. 2.

The process in which raw water passes through the soft water generator 2 and is converted into soft water or hardened water is mainly examined. First, the raw water is supplied from the outside to at least one of the soft water generator 2 or/and the salt water generator 5 through a raw water flow path 111. A first valve 131 may be disposed in the raw water flow path 111. The first valve 131 may open and close the raw water flow path 111. The raw water flow path 111 may be connected to a first supply flow path 112 and a second supply flow path 113. The first supply flow path 112 is connected to the soft water generator 2, and the second supply flow path 113 is connected to the salt water generator 5. A second valve 132 for opening and closing the second supply path 113 may be disposed in the second supply path 113.

The soft water generator 2 may include a soft water chamber therein. The soft water chamber may include an ion resin that converts externally supplied raw water into soft water. The salt water generator 5 may include a regeneration chamber. The regeneration chamber may be filled with salt for supplying regeneration water (salt water) to restore the ion resin to its original state when performance of the ion resin is degraded. The soft water generator 2 and the salt water generator 5 may be configured as a single module, and the soft water generator 2 and the salt water generator 5 may be connected by a regeneration path (not illustrated). Then the salt water generated in the salt water generator 5 may be supplied to the soft water generator 2 through the regeneration flow path.

When the performance of the ion exchange resin in the soft water generator 2 deteriorates due to continued use, the regeneration water containing Na⁺ may be passed through the salt water generator 5 and then through the ion resin in the soft water generator 2, thereby causing substitution of accumulated Ca²⁺ and Mg²⁺. Meanwhile, after the regeneration process, a rinse process is performed in which raw water is supplied directly to the soft water generator 2 from the first valve 131(111) to wash away Na⁺ remaining outside the ion exchange resin in the soft water generator 2.

Therefore, the raw water undergoes a process in which hardness components are removed in the soft water generator 2 and becomes soft water. The soft water generated in the soft water generator 2 may be supplied to the electrolyzed water generator 3. Specifically, the soft water generator 2 and the electrolyzed water generator 3 may be connected by a soft water supply flow path 114. A third valve 133 that opens and closes the soft water supply path 114 may be installed in the soft water supply path 114.

The salt water generated in the salt water generator 5 may be supplied to the electrolyzed water generator 3. Specifically, the salt water generated in the salt water generator 5 may be mixed with the soft water generated in the soft water generator 2 and supplied to the electrolyzed water generator 3. The salt water discharged from the salt water generator 5 may be supplied to the soft water supply path 114. The salt water generator 5 and the soft water supply path 114 may be connected by a salt water flow path 115.

The mixed water of the soft water supplied from the soft water supply path 114 and the salt water may be supplied to each of a plurality of electrolytic compartments of the electrolyzed water generator 3. The soft water supply path 114 and each electrolytic compartment may be connected by a mixed water flow path 116. For example, the mixed water flow path 116 may include a first mixed water flow path 116a and a second mixed water flow path 116b.

The mixed water supplied from the soft water generator 2 and the salt water generator 5 is electrolyzed in the electrolyzed water generator 3 to be converted into electrolyzed water, and then introduced into the washer 1. According to the present disclosure, the mixed water obtained by mixing the salt water and the soft water discharged during the softening process is electrolyzed and used as the washing water, thereby reducing a usage ratio of detergent and improving washing efficiency. Furthermore, since electrical conductivity in the electrolyzed water generator 3 is increased, costs and energy required for generating electrolyzed water can be reduced.

In general, the raw water introduced from an external source contains chlorine typically used for disinfection, and the electrolyzed water is ionized into hydrogen ions and oxygen species. The ionized oxygen species combine with chlorine to generate an oxidizing mixed oxidant, namely chlorine monoxide (ClO⁻). The chlorine monoxide generated in this way has the property of easily adsorbing other components and, thus, can sterilize and wash the dishes stored in the washer 1 by adsorbing various harmful bacteria on the dishes.

In order to generate the electrolyzed water, the electrolyzed water generator 3 uses a supply of water with a high dissolved oxygen content (TDS), so hard water containing various ions such as Cl⁻, Ca²⁺, and Mg²⁺ may be utilized by passing through the soft water generator 2. Hard water (or soft water) is supplied from the soft water generator 2 to the electrolyzed water generator 3, and since this supplied water that has been regenerated or rinsed, more dissolved ions exist in the supplied water than in general tap water.

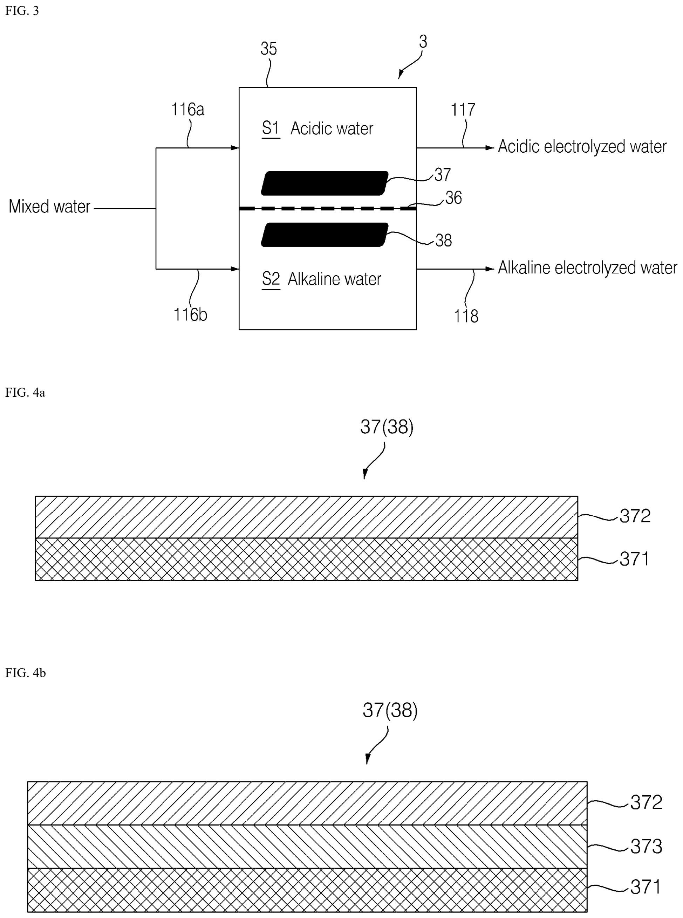

Water electrolyzed in the electrolyzed water generator 3 may exhibit a sterilizing effect. The sterilization by electrolysis sterilizes or eliminates microorganisms remaining in water by allowing water to pass between electrodes of different polarity. In the treated water, oxidizing mixtures that have a sterilizing effect, such as chlorine (Cl²), hypochlorite ions (OCl⁻), and other sterilizing ions and free radicals, are generated. Various oxidizing agents, such as hypochlorous acid, chlorine, chlorine dioxide, and other chlorine-based oxidizing agents are typically the most effective sterilizing agents used for sanitary purposes in household or industrial products. The strong oxidation potential of these oxidizing molecules is commonly applied in various fields including disinfection and sterilization, and a detailed description of the disinfection and sterilization process or effect is omitted. The detailed configuration of the electrolyzed water generator 3 is described later in FIG. 3.

A storage tank 4 for storing the electrolyzed water may be disposed between the electrolyzed water generator 3 and the washer 1. For example, the storage tank 4 may include a first storage tank 41 for storing electrolyzed water with a pH lower than a reference pH, and a second storage tank 42 for storing electrolyzed water with a pH higher than the reference pH. Preferably, acidic electrolyzed water is stored in the first storage tank 41, and alkaline electrolyzed water is stored in the second storage tank 42.

The first storage tank 41 is connected to a first electrolyzed tank S1 via an acidic water supply flow path 117, and the second storage tank 42 is connected to a second electrolyzed tank S2 via an alkaline water supply flow path 118. The first storage tank 41 and the second storage tank 42 are connected to the washer 1 by a washing water supply flow path 119. The acidic electrolyzed water discharged from the first storage tank 41 may be regulated by a fourth valve 134, and the alkaline electrolyzed water discharged from the second storage tank 42 may be regulated by the fifth valve 135.

The washer 1 selectively receives acidic water or alkaline water generated by the electrolyzed water generator 3 to wash the object to be washed. For example, the washer 1 may receive the alkaline water from the electrolyzed water generator 3 to wash the object to be washed, and the acidic water may be discharged into a drain.

The soft water generated in the soft water generator 2 may be supplied to the washer 1 through a bypass flow path 120 and drained from the washer 1. The salt water generated in the salt water generator 5 may be supplied to the washer 1 through the bypass flow path 120 and drained from the washer 1. The bypass flow path 120 allows the mixed water, which is the mixture of the soft water generated in the soft water generator 2 and the salt water generated in the salt water generator 5, to bypass the electrolyzed water generator 3. The bypass flow path 120 may be connected to the soft water supply flow path 114. A bypass valve 121 that opens and closes the bypass flow path 120 may be disposed in the bypass flow path 120.

FIG. 2 is a cross-sectional view schematically illustrating the structure of the washer 1 of FIG. 1. Referring to FIG. 2, a dishwasher, which is one embodiment of the washer 1, will be described. The dishwasher 1 may include a case 10 forming an exterior thereof, a washing tub 30 provided inside the case 10, a door 11 rotatably installed on the case 10 to open and close the washing tub 30, baskets 12a and 12b provided inside the washing tub 30 to accommodate dishes, spray nozzles 311 and 313 configured to spray washing water, a sump configured to store washing water, a circulation pump 51 configured to pump the washing water from the sump and supply the washing water to the spray nozzles 311 and 313, a drain pump 52 configured to discharge the washing water from the sump together with contaminants to an outside of the case 10, a vane 400 configured to move within the washing tub 30 and reflect the washing water toward the dishes, and a vane driving device configured to drive the vane 400. Once the dishwashing is complete, a drying process is performed to remove any remaining washing water from the dishes and the washing tub 30. It should be appreciated that a dishwasher may include fewer, additional and/or different components from those depicted in FIG. 2.

The washing tub 30 may be provided within the case 10 with at least one open surface. For example, the washing tub 30 may have a generally box-shaped shape with a front opening for loading and unloading dishes. A front opening 36 (FIG. 3) of the washing tub 30 may be opened and closed by the door 11. The door 11 may be formed by combining at least two door frames. One door frame may form the exterior, and the other door frame may form the interior of the door.

For example, the washing tub 30 may include an upper surface 31, a bottom surface 35 facing the upper surface 31, a rear surface 32 facing the front opening 36, and left and right surfaces 33 facing each other. The upper surface 31 and bottom surface 35 may be connected by the rear surface 32, left surface 33, and right surface 34.

The washing tub 30 may include a rib to reinforce rigidity and reduce vibration. The rib may be defined as a surface having a step with respect to one surface of the washing tub 30. The rib may be formed by one surface of the washing tub 30 protruding or being recessed. The rib may be formed on the upper surface 31, bottom surface 35, rear surface 32, left surface 33, and right surface 34 of the washing tub 30.

The baskets 12a and 12b may be wire racks made of wire to allow washing water to pass through without pooling. The baskets 12a and 12b may be detachably installed within the washing tub 30. The baskets 12a and 12b may include an upper basket 12a disposed at the upper portion of the washing tub 30 and a lower basket 12b disposed at the lower portion of the washing tub 30.

The spray nozzles 311 and 313 may spray washing water at relatively high pressure to wash dishes. The spray nozzles 311 and 313 may include an upper rotating nozzle 311 disposed at the upper portion of the washing tub 30, an intermediate rotating nozzle 313 disposed at the center of the washing tub 30, and fixed nozzles disposed at the lower portion of the washing tub 30.

The upper rotating nozzle 311 is disposed above the upper basket 12a and may spray washing water downward while being rotated by water pressure. For this purpose, spray holes 312 may be provided at the lower end of the upper rotating nozzle 311. The upper rotating nozzle 311 may directly spray washing water toward dishes stored in the upper basket 12a.

The intermediate rotating nozzle 313 may be provided between the upper basket 12a and the lower basket 12b and may spray the washing water in an up-down direction while being rotated by water pressure. For this purpose, spray holes 314 may be provided at the upper end and the lower end of the intermediate rotating nozzle 313. The intermediate rotating nozzle 313 may directly spray the washing water toward dishes stored in the upper basket 12a and the lower basket 12b.

Unlike the rotating nozzles 311 and 313, the fixed nozzles are provided so as not to move and are fixed to one side of the washing tub 30. The fixed nozzles may be disposed approximately adjacent to a rear surface 32 of the washing tub 30 and spray the washing water toward the front of the washing tub 30. Therefore, the washing water sprayed from the fixed nozzles may not be directed directly at the dishes.

The washing water sprayed from the fixed nozzles may be reflected toward the dishes by the vane 400. The fixed nozzles may be disposed below the lower basket 12b, and the vane 400 may reflect the washing water sprayed from the fixed nozzles upward. In this way, the washing water sprayed from the fixed nozzles may be reflected toward the dishes stored in the lower basket 12b by the vane 400.

The fixed nozzles may include a plurality of spray holes arranged in a left-right direction of the washing tub 30. The plurality of spray holes may spray washing water forward. The vane 400 may extend long in the left-right direction of the washing tub 30 so as to reflect all of the washing water sprayed from the plurality of spray holes of the fixed nozzles. For example, one longitudinal end of the vane 400 may be adjacent to a left surface 33 of the washing tub 30, and the other longitudinal end of the vane 400 may be adjacent to a right surface 34 of the washing tub 30.

The vane 400 may perform a linear reciprocating motion along the spraying direction of the washing water sprayed from the fixed nozzles. For example, the vane 400 may linearly reciprocate along the front-rear direction of the washing tub 30. Therefore, the linear spray structure including these fixed nozzles and the vane 400 can wash the entire area of the washing tub 30 without any blind spots. This is different from the case of rotating nozzles, which can only spray the washing water within the range of the rotation radius.

The fixed nozzles may include a left fixed nozzle disposed on the left side of the washing tub 30 and a right fixed nozzle disposed on the right side of the washing tub 30. The rotating nozzles 311 and 313 and the fixed nozzles may spray the washing water independently of each other. Furthermore, the left fixed nozzle and the right fixed nozzle may also spray the washing water independently of each other. Washing water sprayed from the left fixed nozzle may be reflected only to the left area of the washing tub 30 by the vane 400, and washing water sprayed from the right fixed nozzle may be reflected only to the right area of the washing tub 30 by the vane 400. Therefore, the dishwasher 1 can independently separate and wash the left and right sides of the washing tub 30. However, the structure of the dishwasher 1 is not necessarily limited to being divided only into left and right portions, and may be further subdivided as necessary.

FIG. 3 is a schematic diagram illustrating the structure of the electrolyzed water generator 3 of FIG. 1. Referring to FIG. 3, the electrolyzed water generator 3 according to one embodiment of the present disclosure generates the electrolyzed water by electrolyzing the mixed water in which the soft water generated in the soft water generator 2 and the salt water generated in the salt water generator 5 are mixed.

For example, the electrolyzed water generator 3 may include an electrolysis chamber 35 having an internal space, a diaphragm 36 that divides the internal space of the electrolysis chamber 35 into a first electrolytic compartment S1 and a second electrolytic compartment S2, is impermeable to ionic substances, and allows current to pass through, a first electrode 37 disposed in the first electrolytic compartment S1, and a second electrode 38 disposed in the second electrolytic compartment S2 and having a polarity opposite to that of the first electrode 37.

A first electrolytic compartment S1 and a second electrolytic compartment S2 are separated by the diaphragm 36, and an anode electrode 37 may be disposed within the first electrolytic compartment S1. A cathode electrode 38 may be disposed within the second electrolytic compartment S2. A micro membrane having micropores of 0.1 to 9 µm may be used as the diaphragm 36.

The first electrode 37 and the second electrode 38 located in the first electrolytic compartment S1 and the second electrolytic compartment S2 electrolyze water to generate hydrogen and oxygen, while ionic substances, namely H⁺ and OH⁻ ions, remain dissolved in the water. In this case, the diaphragm 36 prevents the two ionic substances from mixing with each other, thereby discharging acidic electrolyzed water and alkaline electrolyzed water to the outside.

Hereinafter, the structure of the electrode used in the electrolyzed water generator 3 will be described in detail.

FIGS. 4a and 4b are cross-sectional views illustrating the electrode structures of the electrolyzed water generator of FIG. 1. Referring to FIG. 4a, at least one of the first electrode 37 and the second electrode 38 may include a substrate metal layer 371 and a catalyst metal layer 372. For example, in the electrolyzed water generator 3 used in a dishwasher, only the first electrode 37 may include the substrate metal layer 371 and the catalyst metal layer 372, and the second electrode 38 may include only the substrate metal layer 371 and may omit the catalyst metal layer 372. In the electrolyzed water generator 3 used in a clothes washer, each of the first electrode 37 and the second electrode 38 may include the substrate metal layer 371 and the catalyst metal layer 372.

The substrate metal layer 371 may include at least one of titanium (Ti), titanium oxide, and stainless steel (SUS). The catalyst metal layer 372 may include at least one material selected from a first group including ruthenium (Ru), iridium (Ir), platinum (Pt), and palladium (Pd), and at least one material selected from a second group including Ti, tantalum (Ta), and tin (Sn). Specifically, the catalyst metal layer 372 may include an oxide of one material selected from the first group and an oxide of one material selected from the second group. Here, the ratio of the material of the first group to the material of the second group in the catalyst metal layer 372 may be 9:1 to 8:2. For example, providing a lower or higher ratio in the catalyst metal layer 372 may result in decreased reactivity and decreased durability.

Preferably, the substrate metal layer 371 may include Ti, and the catalyst metal layer 372 may include both Pt and Ti. Furthermore, the substrate metal layer 371 or the catalyst metal layer 372 may may have various shapes including, but not limited to, a plate-shaped or a mesh-shaped. When the electrode is configured to include the substrate metal layer 371 and the catalyst metal layer 372, stability in acidic and alkaline environments can be ensured, and the performance and lifespan can be improved while significantly reducing an amount of platinum, which is an expensive noble metal.

Referring to FIG. 4b, as another example, at least one of the first electrode 37 and the second electrode 38 may include the substrate metal layer 371, the catalyst metal layer 372, and a protective layer 373 disposed between the substrate metal layer 371 and the catalyst metal layer 372. The protective layer 373 may be an oxide of at least one of Ti, Ta, silicon (Si), and Sn. The protective layer 373 serves to prevent damage caused by oxidation/reduction due to direct contact of the substrate metal layer 371 with the supply water. The protective layer 373 may be coated on the substrate metal layer 371. Preferably, the substrate metal layer 371 may include Ti, the protective layer 373 may include TiOₓ, and the catalyst metal layer 372 may include Pt and Ti to provide desirable performance while avoiding high production costs.

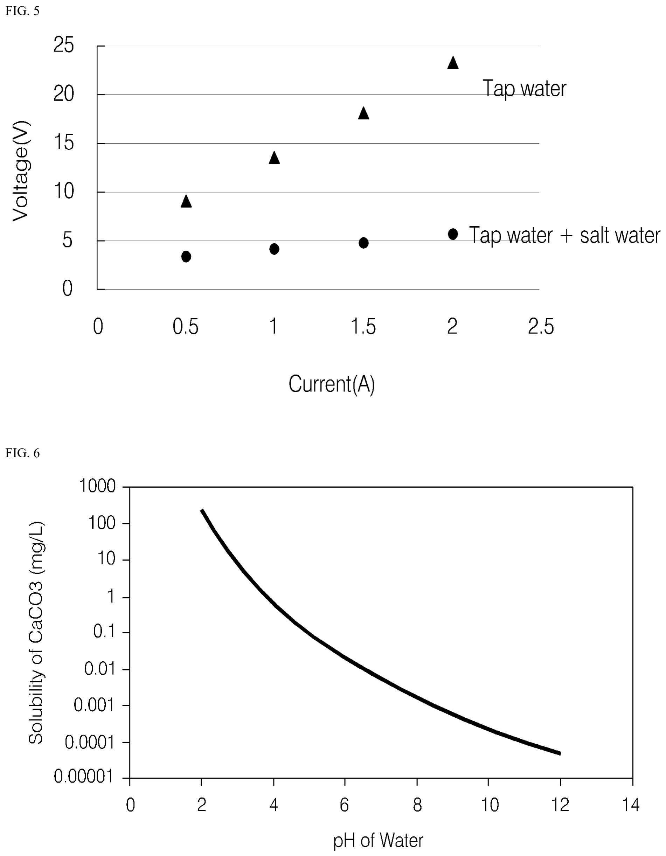

FIG. 5 is a diagram illustrating the relationship between voltage for tap water and voltage for mixture of the tap water and salt water. Referring to FIG. 5, when the salt water from the water softener is mixed with tap water (soft water or raw water) and introduced into the electrolyzed water generator 3, electrical conductivity of the mixed water is generally increased. When electrolysis of the mixed water obtained by mixing tap water with salt water is compared, the power required for electrolysis of tap water mixed with salt water having higher electrical conductivity is generally reduced. Accordingly, the electrolyzed water generator 3 may be operated at a lower voltage, power consumption may be reduced, and a lifespan of the electrode may be extended in comparison.

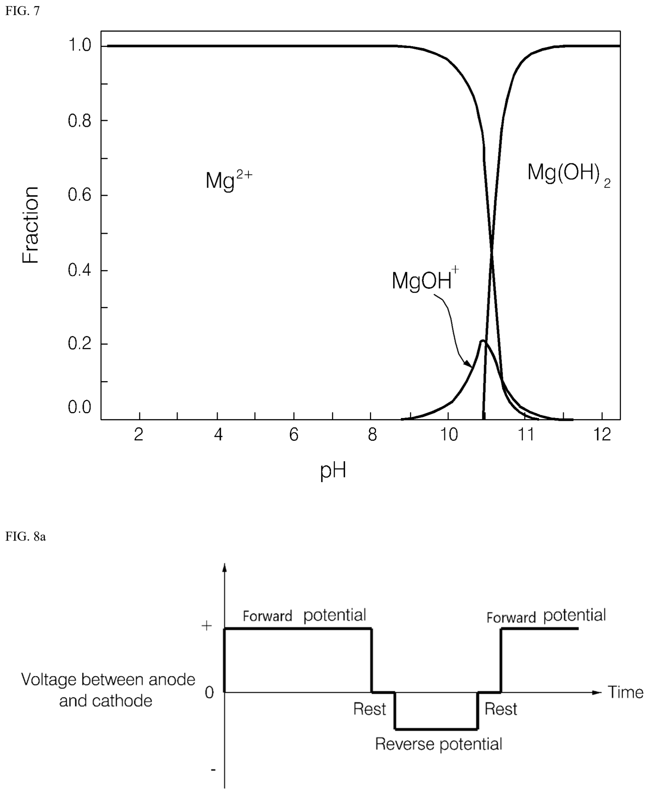

FIG. 6 is a graph illustrating the pH concentration of water and the solubility of calcium carbonate CaCO₃, and FIG. 7 is a graph illustrating the correlation between the pH concentration of water and the fractions of Mg²⁺ and MgOH⁺. Referring to FIGS. 6 and 7, when the electrolyzed water generation device is operated using tap water, divalent cations in the water, such as Ca²⁺ and Mg²⁺ exhibit reduced solubility as the pH of an alkaline-water electrolytic compartment of the electrolyzed water generation device increases, and thus are formed as insoluble scale components on a surface of a cathode electrode. In order to remove scale deposited on the surface of the cathode electrode, voltages applied to the anode and the cathode of the electrolyzed water generator 3 are periodically alternated, such that the first electrolytic compartment S1 and the second electrolytic compartment S2 are alternately operated to remove scale, thereby performing reverse washing and alternating driving.

Hereinafter, the operation for removing the scale from the electrode surface will be described in detail. FIG. 8a is a diagram illustrating the operation of the electrolyzed water generator 3 according to one embodiment of the present disclosure. Referring to FIG. 8a, the polarities of the first electrode 37 and the second electrode 38 of the electrolyzed water generator 3 may be switchable between a constant forward potential and a reverse potential. For example, the water treatment apparatus of the present disclosure may include a controller (see FIG. 1) that drives the electrolyzed water generator 3 by applying voltage or current to the first electrode 37 and the second electrode 38 thereof.

As used herein, the controller may include a central processing unit, a graphics processing unit, a microprocessor, a processor, a microcontroller, a digital signal processor, a field-programmable gate array, an application-specific integrated circuit, and/or another type of processing component. The controller is implemented in hardware, firmware, or a combination of hardware and software. In some implementations, the controller may include one or more processors capable of being programmed to perform a function and a memory may include a random access memory, a read only memory, and/or another type of memory (e.g., a flash memory, a magnetic memory, and/or an optical memory).

The controller may alternately execute forward-potential driving in which the polarities of the first electrode 37 and the second electrode 38 are driven at a constant potential, and reverse-potential driving in which the polarities of the first electrode 37 and the second electrode 38 are driven at a reverse potential. For example, during a first cycle of operation of the electrolyzed water generator 3, the first electrode 37 may become the cathode and the second electrode 38 may become the anode. In the subsequent second cycle, the first electrode 37 may become the anode and the second electrode 38 may become the cathode.

For example, a potential state in which the first electrode 37 becomes the cathode and the second electrode 38 becomes the anode may be referred to as the forward-potential driving. Conversely, a potential state in which the first electrode 37 becomes the anode and the second electrode 38 becomes the cathode may be referred to as a reverse-potential driving. However, the present disclosure is not limited thereto, and the reverse may also be used.

In this way, the electrolyzed water generator 3 may be operated by repeating the forward-potential driving and the reverse-potential driving. In this case, for example, the electrolyzed water may be generated during both the forward-potential driving and the reverse-potential driving. This may be referred to as symmetric potential driving. The electrolyzed water may be generated during the forward-potential driving, and at least one of scale removal and washing operations may be performed during the reverse-potential driving.

During this symmetric potential driving, the first electrode 37 and the second electrode 38 may have the same structure. For example, both the first electrode 37 and the second electrode 38 may each include the substrate metal layer 371 and the catalyst metal layer 372.

Meanwhile, as another example, the electrolyzed water may be generated only during either the forward-potential driving or the reverse-potential driving. This may be referred to as asymmetric potential driving.

During this asymmetric potential driving, the first electrode 37 and the second electrode 38 may have different structures. For example, either the first electrode 37 or the second electrode 38 may not include the catalyst metal layer 372.

During the asymmetric potential driving, the controller may control the driving time of the reverse-potential driving to be shorter than that of the forward-potential driving. Preferably, the driving time of the reverse-potential driving may be 0.1% to 0.2% of the driving time of the forward-potential driving.

Furthermore, the voltage or current during the reverse-potential driving may be lower than that during the forward-potential driving. Preferably, the voltage during the reverse-potential driving may be 20% to 50% of the voltage during the forward-potential driving.

Accordingly, since the two electrodes have different configurations, and, in the asymmetric potential driving, the driving time of the reverse-potential driving is shorter than the driving time of the forward-potential driving, and the voltage or current applied during the reverse-potential driving is lower than the voltage or current applied during the forward-potential driving, the voltage and current applied during the forward-potential driving for generating electrolyzed water are reduced, and the driving time of the reverse-potential driving is shortened, thereby increasing a generation time of electrolyzed water and improving electrolyzed water generation efficiency.

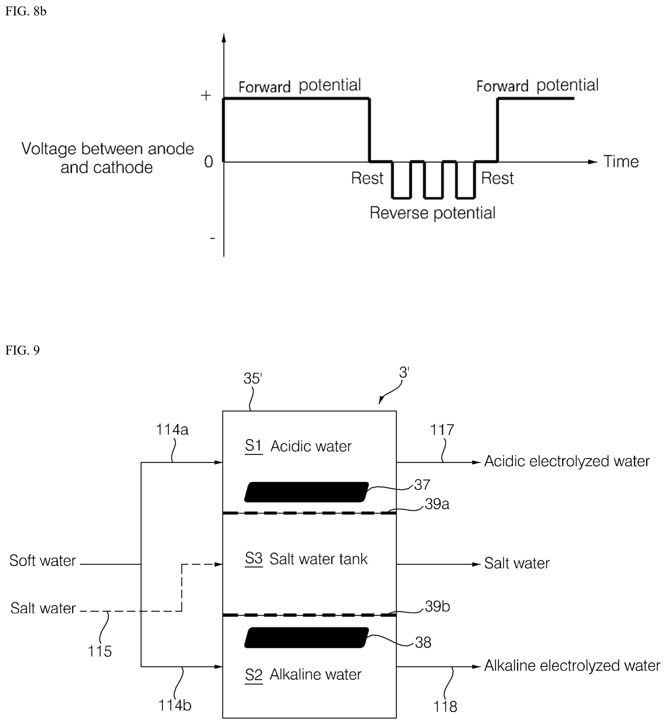

In certain examples depicted in FIGS. 8A and 8B, a rest period may be included between the forward-potential driving and the reverse-potential driving. The rest period is a period when power is not supplied to the first electrode 37 and second electrode 38.

Referring to FIG. 8b, the polarities of the first electrode 37 and second electrode 38 of the electrolyzed water generator 3 may be switchable between the constant forward potential and the reverse potential, and may be driven in a pulsed manner during the reverse-potential driving. By supplying reverse power to the electrodes in a pulsed manner during the reverse-potential driving, the scaling effect can be maximized.

FIG. 9 is a cross-sectional view illustrating the electrode structure of an electrolyzed water generator 3' according to another embodiment of the present disclosure. Referring to FIG. 9, a water treatment apparatus according to another embodiment of the present disclosure includes a soft water generator 2 that receives raw water and generates soft water, a salt water generator 5 that generates salt water, and an electrolyzed water generator 3' that uses the salt water generated in the salt water generator 5 to electrolyze the soft water generated in the soft water generator 2 to generate the electrolyzed water.

Compared to the electrolyzed water generator 3 of FIG. 3, the electrolyzed water generator 3' of FIG. 9 uses the salt water generated in the salt water generator 5 to electrolyze the soft water generated in the soft water generator 2 to generate the electrolyzed water. In the following description of the electrolyzed water generator 3', descriptions of components identical to those of the electrolyzed water generator 3 of FIG. 3 will be omitted, and components without a separate description will be considered identical to those of the electrolyzed water generator 3 of FIG. 3.

Specifically, an electrolyzed water generator 3' of FIG. 9 includes an electrolysis chamber 35' having an internal space, a separation membrane that divides the internal space of the electrolysis chamber 35' into a first electrolytic compartment S1, a second electrolytic compartment S2, and a salt water tank S3 between the first electrolytic compartment S1 and the second electrolytic compartment S2 and selectively permeates ionic substances, a first electrode 37 disposed in the first electrolytic compartment S1, and a second electrode 38 disposed in the second electrolytic compartment S2 and having a polarity opposite to that of the first electrode 37.

The separation membrane includes a first separation membrane 39a that partitions the first electrolytic compartment S1 and the salt water tank S3, and a second separation membrane 39b that partitions the second electrolytic compartment S2 and the salt water tank S3. The separation membrane 39a, 39b may be an ion-permeable membrane that selectively transmits only ionic components.

The salt water tank S3 is supplied with salt water from the salt water generator 5, and the first electrolytic tank S1 and the second electrolytic tank S2 are supplied with raw water or soft water generated by the soft water generator 2, respectively. For this purpose, the salt water tank S3 and the salt water generator 5 may be connected by a salt water flow path 115'. The salt water tank S3 may contain salt water (e.g., water containing NaCl).

When electricity is applied to the anode and cathode of the first electrode 37 and the second electrode 38, Cl⁻ ions in the central salt water tank S3 move to the first electrolytic tank S1 through the ion-permeable membrane, water is decomposed to produce oxygen, and the water becomes acidic electrolyzed water. In the second electrolytic tank S2 where the second electrode 38 operates as a cathode, Na⁺ ions in the central salt water tank S3 move to the alkaline electrolytic compartment through the ion-permeable membrane, water is decomposed to produce hydrogen, and the water becomes alkaline electrolyzed water.

The electrolyzed water generator of the present disclosure and the water treatment apparatus and washing apparatus including the same have one or more of the following effects. According to the present disclosure, washing is performed using the soft water and the electrolyzed water generated by the soft water generator and the electrolyzed water generator, respectively, thereby providing an advantage in that a detergent usage amount can be reduced or washing can be performed under detergent-free conditions due to sterilizing power of the electrolyzed water.

In addition, according to the present disclosure, a predetermined amount of the salt water for regenerating the ion exchange resin of the water softener is introduced into the influent water of the electrolyzed water generation device to increase the electrical conductivity of electrolyzed water, thereby providing an advantage of reducing power consumption during generation of the electrolyzed water.

Furthermore, according to the present disclosure, during the reverse driving required to suppress scale formation in the electrolyzed water generation device, use of the water softener reduces scale particles such as calcium, such that the reverse driving is performed for only a short time, thereby minimizing damage to an electrode, and since a reverse driving time is reduced, a generation time of electrolyzed water is increased, thereby providing an advantage of improving energy consumption of the electrolyzed water generation device.

In addition, according to the present disclosure, the electrode of the electrolyzed water generation device is configured to have the multilayer structure including the substrate metal layer and the catalyst metal layer, thereby providing an advantage of significantly reducing an amount of platinum, which is an expensive precious metal, while improving performance and lifespan of the electrode.

An aspect of the present disclosure provide a washing apparatus capable of reducing the amount of detergent used or performing washing under detergent-free conditions. Another aspect of the present disclosure provides a water treatment apparatus and a washing apparatus in which a predetermined amount of concentrated salt water for regenerating an ion exchange resin of a water softener is supplied to influent water of an electrolyzed water generation device to increase electrical conductivity of electrolyzed water, thereby reducing power consumption during generation of the electrolyzed water.

Another aspect of the present disclosure provides a water treatment apparatus and a washing apparatus in which, during reverse driving required to suppress scale formation in an electrolyzed water generation device, since scale particles such as calcium are reduced by use of a water softener, the reverse driving is performed only for a short period of time, thereby improving durability of electrodes and reducing energy consumption of the electrolyzed water generation device.

Another aspect of the present disclosure provides a water treatment apparatus and a washing apparatus in which electrodes of an electrolyzed water generation device are improved to significantly reduce the amount of an expensive noble metal, such as platinum, while improving performance and lifespan thereof.

The aspects of the present disclosure are not limited to those described above, and other aspect not explicitly described herein will be clearly understood by those skilled in the art from the following description.

In order to achieve the above-described aspects, according to one embodiment of the present disclosure, there are provided a water treatment apparatus and a washing apparatus including: a soft water generator that receives raw water and generates soft water; a salt water generator that generates salt water; and an electrolyzed water generator that generates electrolyzed water by electrolyzing mixed water in which the soft water generated by the soft water generator and the salt water generated by the salt water generator are mixed.

Here, the electrolyzed water generator may include an electrolysis chamber having an internal space, a diaphragm that divides the internal space of the electrolysis chamber into a first electrolytic compartment and a second electrolytic compartment, is impermeable to ionic substances, and allows current to pass through, a first electrode disposed in the first electrolytic compartment, and a second electrode disposed in the second electrolytic compartment and having a polarity opposite to that of the first electrode.

The present disclosure may further include a controller that drives the electrolyzed water generator by applying a voltage or current to the first electrode and the second electrode thereof. The controller may alternately execute forward-potential driving in which polarities of the first and second electrodes are driven at a constant potential, and reverse-potential driving in which the polarities of the first and second electrodes are driven at a reverse potential, and a driving time of the reverse-potential driving may be shorter than a driving time of the forward-potential driving. The driving time of the reverse-potential driving may be 0.1% to 0.2% of the driving time of the forward-potential driving.

A voltage or current during the reverse-potential driving may be lower than a voltage or current during the forward-potential driving. A voltage during the reverse-potential driving may be 20% to 50% of a voltage during the forward-potential driving.

The mixed water may be supplied to each of the first electrolytic compartment and the second electrolytic compartment. The electrolyzed water may be generated during the forward-potential driving, and at least one of scale removal and washing operations may be performed during the reverse-potential driving.

The water treatment apparatus may be driven in a pulse manner during the reverse-potential driving. A rest period may be included between the forward-potential driving and the reverse-potential driving.

At least one of the first electrode and the second electrode may include a substrate metal layer, and a catalyst metal layer (also referred to as catalytic metal layer herein). The substrate metal layer may include at least one of titanium, titanium oxide, and stainless steel. The catalytic metal layer may include at least one material selected from a first group including Ru, Ir, Pt, and Pd, and at least one material selected from a second group including Ti, Ta, and Sn. The catalytic metal layer may include an oxide of one material selected from the first group, and an oxide of one material selected from the second group. A ratio of the material of the first group to the material of the second group may be 9:1 to 8:2.

At least one of the first electrode and the second electrode may further include a protective layer positioned between the substrate metal layer and the catalyst metal layer. The protective layer may be an oxide of at least one of Ti, Ta, and Sn.

According to another configuration of the present disclosure, there are provided a water treatment apparatus and a washing apparatus including the same, including: a soft water generator that receives raw water and generates soft water; a salt water generator that generates salt water; and an electrolyzed water generator that generates electrolyzed water by electrolyzing the soft water generated by the soft water generator by using the salt water generated by the salt water generator.

The electrolyzed water generator may include an electrolysis chamber having an internal space, a separation membrane that divides the internal space of the electrolysis chamber into a first electrolytic compartment, a second electrolytic compartment, and a salt water tank between the first and second electrolytic compartments, and selectively permeates ionic substances, a first electrode disposed in the first electrolytic compartment, and a second electrode disposed in the second electrolytic compartment and having a polarity opposite to that of the first electrode. The soft water generated in the soft water generator may be supplied to the first electrolytic compartment and the second electrolytic compartment, and the salt water generated in the salt water generator may be supplied to the salt water tank.

According to another aspect of the present disclosure, there is provided a washing apparatus including: a soft water generator that receives raw water and generates soft water; a salt water generator that generates salt water; an electrolyzed water generator that generates electrolyzed water by electrolyzing mixed water in which the soft water generated by the soft water generator and the salt water generated by the salt water generator are mixed; and a washer that receives the electrolyzed water and washes an object to be washed.

Specific details of other embodiments are included in the detailed description and drawings. Effects of the present disclosure are not limited to those mentioned above, and other effects not mentioned will be clearly understood by those skilled in the art from the description of the claims.

Embodiment may be implemented with regard to other embodiments as they are combined with one another or modified by those skilled in the art. Thus, content related to these combinations and modifications should be construed as including in the scope and spirit of the disclosure as disclosed in the accompanying claims.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative to the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A water treatment apparatus comprising:
a soft water generator (2) to receive raw water and to generate soft water from the raw water;
a salt water generator (5) to generate salt water; and
an electrolyzed water generator (3) having an internal space in which the soft water generated by the soft water generator (2) and the salt water generated by the salt water generator (5) are mixed to form mixed water, and in which electrolyzed water is generated by electrolyzing the mixed water.

2. The water treatment apparatus of claim 1, wherein the electrolyzed water generator (3) includes:
an electrolysis chamber (35) having the internal space,
a diaphragm (36) that divides the internal space of the electrolysis chamber (35) into a first electrolytic compartment (S1) and a second electrolytic compartment (S2), is impermeable to ionic substances, and allows current to pass through,
a first electrode (37) disposed in the first electrolytic compartment (S1), and
a second electrode (38) disposed in the second electrolytic compartment (S2) and having a polarity opposite to that of the first electrode (37).

3. The water treatment apparatus of claim 2, further comprising a controller that drives the electrolyzed water generator (3) by applying a voltage and a current to the first electrode (37) and the second electrode (38) thereof.

4. The water treatment apparatus of claim 3, wherein the controller alternately executes forward-potential driving in which polarities of the first and second electrodes (37, 38) are driven at a constant potential, and reverse-potential driving in which the polarities of the first and second electrodes (37, 38) are driven at a reverse potential, and wherein a driving time of the reverse-potential driving is shorter than a driving time of the forward-potential driving.

5. The water treatment apparatus of claim 4, wherein the driving time of the reverse-potential driving is 0.1% to 0.2% of the driving time of the forward-potential driving.

6. The water treatment apparatus of claim 4 or 5, wherein at least one of the voltage or the current applied during the reverse-potential driving are lower than the voltage or the current applied during the forward-potential driving.

7. The water treatment apparatus of any one of claims 4 to 6, wherein the voltage applied during the reverse-potential driving is 20% to 50% of the voltage applied during the forward-potential driving.

8. The water treatment apparatus of any one of claims 2 to 7, wherein the mixed water is supplied to each of the first electrolytic compartment (S1) and the second electrolytic compartment (S2).

9. The water treatment apparatus of claim 4, or of any one of claims 5 to 8 when depending on claim 4, wherein the electrolyzed water is generated during the forward-potential driving, and at least one of a scale removal operation or a washing operation is performed during the reverse-potential driving.

10. The water treatment apparatus of claim 4, or of any one of claims 5 to 9 when depending on claim 4, wherein the water treatment apparatus is driven in a pulse manner during the reverse-potential driving.

11. The water treatment apparatus of claim 4, or of any one of claims 5 to 10 when depending on claim 4, wherein the controller drives the electrolyzed water generator (3) such that a rest period occurs between the forward-potential driving and the reverse-potential driving.

12. The water treatment apparatus of any one of claims 2 to 11, wherein at least one of the first electrode (37) or the second electrode (38) includes a substrate metal layer (371), and a catalytic metal layer (372).

13. The water treatment apparatus of claim 12, wherein the substrate metal layer (371) includes at least one of titanium, titanium oxide, or stainless steel.

14. The water treatment apparatus of claim 12 or 13, wherein the catalytic metal layer (372) comprises: at least one material selected from a first group including Ru, Ir, Pt, and Pd, and at least one material selected from a second group including Ti, Ta, and Sn.

15. The water treatment apparatus of claim 14, wherein the catalytic metal layer (372) comprises: an oxide of the at least one material selected from the first group, and an oxide of the at least one material selected from the second group.
